Europäisches Patentamt

European Patent Office

Office européen des brevets

(11) Publication number: **0 277 730 B1**

# EUROPEAN PATENT SPECIFICATION

(45) Date of publication of patent specification: **06.05.92**  (51) Int. Cl.⁵: **C01F 7/02**

(21) Application number: **88300502.7**

(22) Date of filing: **21.01.88**

(54) Process for the preparation of alumina.

(30) Priority: **29.01.87 JP 19126/87**
**29.01.87 JP 19127/87**

(43) Date of publication of application:
**10.08.88 Bulletin 88/32**

(45) Publication of the grant of the patent:
**06.05.92 Bulletin 92/19**

(84) Designated Contracting States:
**DE FR GB IT**

(56) References cited:
**DE-B- 1 207 360**
**FR-A- 2 090 593**
**GB-A- 2 079 261**
**US-A- 3 802 893**

(73) Proprietor: **SUMITOMO CHEMICAL COMPANY,**
**LIMITED**
**Kitahama 4-chome 5-33**
**Chuo-ku Osaka 541(JP)**

(72) Inventor: **Harato, Takuo**
**37-13, Nishioizumi-1-chome**
**Nerima-ku Tokyo(JP)**
Inventor: **Furubayashi, Toshiki**
**11-29, Hoshigoecho**
**Niihama-shi(JP)**
Inventor: **Ashitani, Toshio**
**5-32, Kikumotocho-1-chome**
**Niihama-shi(JP)**
Inventor: **Ogawa, Toru**
**2-241, Ikkucho 2-chome**
**Niihama-shi(JP)**

(74) Representative: **Goldin, Douglas Michael et al**
**J.A. KEMP & CO. 14, South Square Gray's Inn**
**London WC1R 5EU(GB)**

Rank Xerox (UK) Business Services
(3.08/2.18/2.0)

**Description**

The present invention relates to a process for preparing alumina powders having sharp particle size distributions.

Alumina powders are in use as raw materials for various ceramic articles, abrasives, special refractories, and others. In recent years, technical progress in fields of ceramics for use as electronic components such as IC substrates has advanced remarkably and the development has been accompanied by severer requirements in quality of alumina powders as raw materials for electronic components.

Improvements in properties of alumina powders are required, since the structural uniformity, productivity and yield of final products are much affected by properties of the raw material alumina powders.

In US-A-3 802 893 a process for preparation of polycristalline alumina having uniform grain size distribution is disclosed. As starting material, alumina, mixed with magnesium oxide and samarium oxide is employed.

For the purpose of achieving, for example, uniform morphology and high density of sintered products, it is desirable that activities of alumina particles be uniform. In other words, particle size distribution of alumina should be narrow and the shape of each particle should be uniform.

When used as abrasives, alumina powders are also required to have sharp particle size distribution from the viewpoint of polishing speed and finishing with scratch-free surfaces.

Heretofore, alumina for ceramics use has been produced for the most part by calcining aluminum hydroxide produced by the Bayer's process in rotary kilns, fluidized bed furnaces, or tunnel furnaces.

Generally, aluminum hydroxide from the Bayer's process consists of aggregate particles (secondary particles) of several to over one hundred $\mu$m resulting from agglomeration of the primary particles of sub-micron to scores $\mu$m. Alumina obtained by calcining this kind of aluminum hydroxide results in a form of strongly agglomerated particles and hence long time is required to disintegrate the agglomerate to proper sizes. In addition, this type of alumina does not cleave along peripheries of the original particles but splits into miscellaneously shaped $\alpha$-alumina fragments. In consequence, the disintegrated alumina particles have broad particle size distribution, activities of the particles become nonuniform and high-density sintered products are difficult to obtain.

In view of such circumstances, the present inventors made intensive studies in order to prepare alumina having uniform shapes and sharp size distribution. As the result, it has been found that all the above noted problems can be solved when aluminum hydroxide and/or transition alumina having specific particle sizes are dispersed in an aqueous solution, and the dispersion being adjusted to a specific viscosity is spray-dried. Based on this finding, the present invention has been accomplished.

Thus, the present invention provides a process for preparing alumina, which comprises the steps of dispersing in an aqueous solution aluminum hydroxide and/or transition alumina having average secondary-particle diameter of up to 5 $\mu$m, adjusting the resulting slurry to viscosity of about 100 to about 1000 centipoises, (100-1000 mPa.s) spray-drying the slurry, and calcining the resulting dry powder.

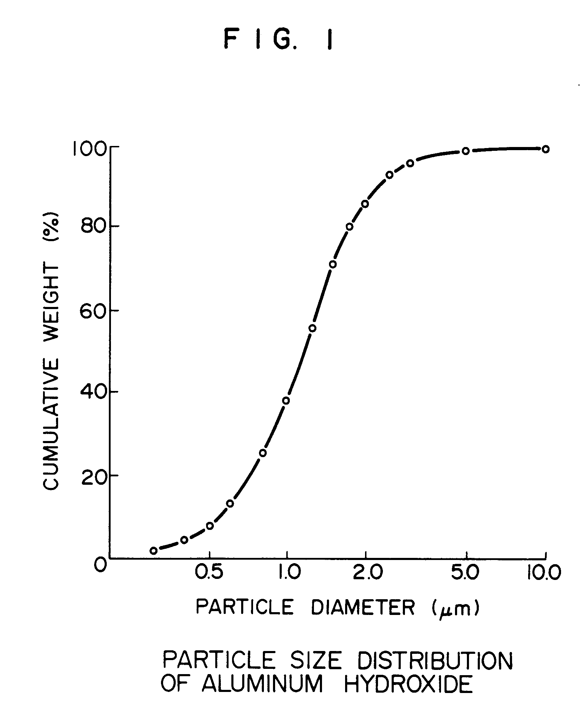

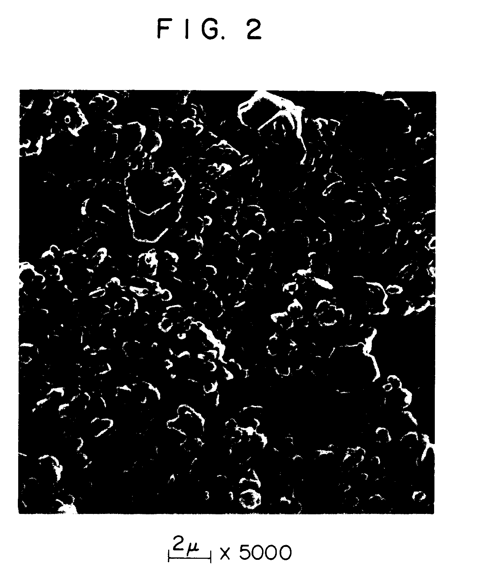

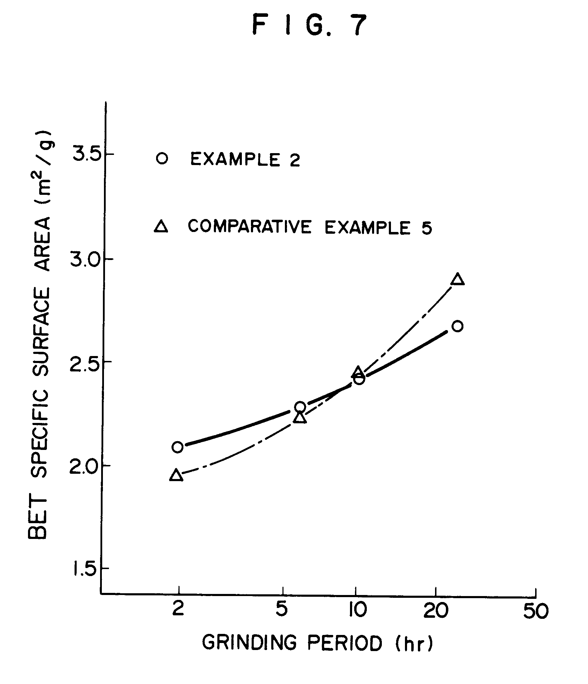

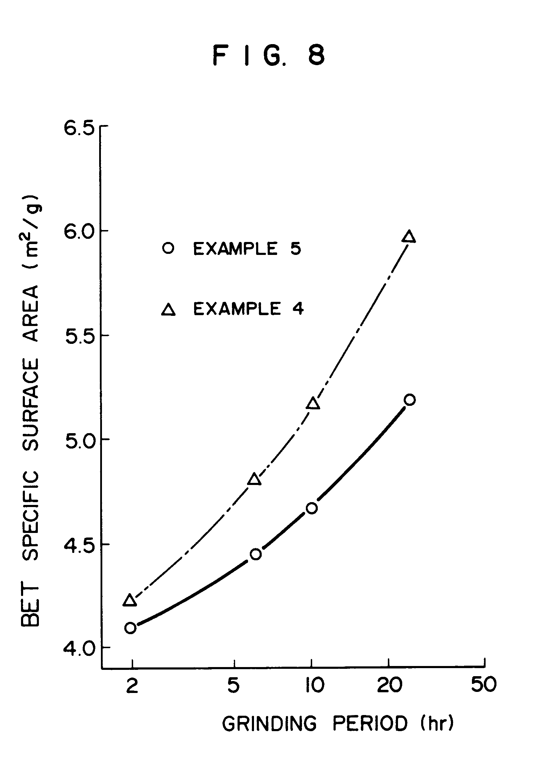

Figs. 1, 3, and 6 show particle size distributions of aluminum hydroxide powders and alumina powders. Figs. 2, 4, and 5 are scanning electron micrographs of aluminum hydroxide powders and alumina powders. Figs. 7 and 8 show relations between BET specific surface areas of particles resulted from ball-milling of alumina powders and their ball-milling periods with respect to differences in their aspect ratios.

Aluminum hydroxide and/or transition alumina for the invention has average secondary-particle diameter of up to about 5 $\mu$m, preferably up to 3 $\mu$m.

There is no particular restriction on processes for producing the aluminum hydroxide and/or transition alumina, so far as the resulting average secondary-particle diameter is up to 5 $\mu$m. However, aluminum hydroxide and/or transition alumina produced by the Bayer's process is used normally from an economical point of view.

When average secondary-particle diameters of aluminum hydroxide and/or transition alumina are larger than 5 $\mu$m, the calcined $\alpha$-alumina therefrom has large particle sizes. Moreover, during agglomeration of the large primary particles, their crystal surfaces are liable to match with others and the particles having matched crystal surfaces tend to unite with the similar ones to grow into large $\alpha$-crystals. As the result, the alumina powders obtained have nonuniform particle sizes.

The term "transition alumina" mentioned herein is an intermediate alumina produced by drying or calcining aluminum hydroxide being in x-, k-, $\theta$-, $\rho$-, $\delta$-, or $\gamma$-crystal form prior to transferring to the $\alpha$-crystal form. Industrially, the transition alumina can be obtained, for instance, by bringing aluminum hydroxide resulting from the Bayer's process into contact with hot gases at temperatures of about 400 to about 1200°C for a period of about 1/6 to 10 seconds, or by heating the aluminum hydroxide under reduced pressure at temperatures of about 250 to 900°C for a period generally of 1 minute to 4 hours. The obtained transition alumina exhibits ignition loss of about 0.5 to about 15% by weight. Hereinafter, the term "aluminum hydroxide", in many cases, includes the transition alumina as well.

In the process of the invention, aluminum hydroxide is dispersed in an aqueous solution to form a slurry. Although dependent on conditions of the subsequent spray drying, the dispersing-mixing ratio of aluminum hydroxide to the aqueous solution is generally from about 200 to about 2000 g/ℓ, preferably from about 600 to about 1200 g/ℓ.

Any dispersing-mixing method may be employed that permits uniform dispersion of aluminum hydroxide in the aqueous solution. For example, the dispersion can be accomplished by mechanical agitation using a stirrer or by wet mixing using a ball mill, attritor, or the like.

Viscosity of thus obtained slurry is usually about several tens centipoises or less depending on dispersing agents added, which is adjusted to viscosity of 100 to 1000 centipoises, (100-1000 mPa.s) preferably of 200 to 800 centipoises, (200-800 mPa.s) and followed by the spray drying. When the viscosity of slurry is lower than the above specified range, the resulting alumina will have no sharp size distribution. On the contrary, when the viscosity is higher, uniform droplets are difficult to form in spray drying with a result that the intended alumina powders having sharp particles size distribution cannot be obtained.

There is no particular restriction on the viscosity adjustment method, and any method may be employed that do not cause marked contamination for the calcined alumina. For example, the viscosity adjustment is accomplished by adding an aqueous ammonia; binders such as polyvinyl alcohol, methyl methacrylate, carboxymethylcellulose or methylcellulose which is often used for shaping alumina; chlorides or carbonates of such a metal as Ca or Mg. However, it is recommended to used aqueous ammonia and/or a binder such as polyvinyl alcohol or the like that will be burnt up during the calcination without leaving any ash in the alumina.

In addition, a binder such as polyvinyl alcohol results in an increased recovery of spray-dried alumina particles in a cyclone collector or the like.

For the spray drying, any methods may be used including the rotary disk method, pressurized nozzle method, two-phase flow nozzle method and the like. Of these methods, the rotary disk method is preferred in that the resulting powders have the most narrow particle size distribution.

Particle size ranges of spray-dried powders are not particularly limited, but average particle diameters thereof are generally in the range of about 20 to about 200 $\mu$m.

The way of achieving the intended particle size of powders depend on types of spray dryer used. In the case of the rotary disk method, the intended particle size can be obtained by controlling the slurry concentration for spray drying, amount of slurry supplied to the disk, disk revolution, gas flow rate, and drying speed.

The thus spray-dried powders of aluminum hydroxide are then calcined. The calcination can be carried out by known means including methods using rotary kilns, fluidized bed furnaces, tunnel furnaces, and the like.

In the process of the invention, it is recommended to carry out the calcination in the presence of a chlorine-containing substance. There is no particular restriction on the choice of chlorine-containing substances provided that the substance evolves chlorine or hydrogen chloride during the calcination. In general, suitable chlorine-containing substances are hydrochloric acid, chlorine gas, aluminum chloride, magnesium chloride, and chlorine-containing macromolecular compounds.

The chlorine-containing macromolecular compounds include, for example, homopolymer of vinyl chloride, copolymers of vinyl chloride with unsaturated ethylenic monomers (including graft copolymers and block copolymers), homopolymer of vinylidene chloride, and copolymers of vinylidene chloride with unsaturated ethylenic monomers.

Amounts of the chlorine-containing substance added to aluminum hydroxide or transition alumina can not be determined unanimously, since the optimum addition depends on amount of chlorine or hydrogen chloride which the chlorine-containing substance possesses or evolves on pyrolysis. In practice, however, the chlorine-containing substance is added in an amount of generally from 0.1 to 10%, preferably from 1 to 5%, in terms of the weight of chlorine based on alumina (dry basis) present in the aluminum hydroxide or transition alumina.

When the amount of chlorine added is in the above specified range, the resulting alumina powders exhibit improved aspect ratios. When the amount exceeds 10% by weight, such a large amount of chlorine is not effective in improving the aspect ratios in proportion to the amount added, and further problems of corroding the equipments arise. Moreover, when a chlorine-containing macromolecular compound is used in such a large amount, decomposition thereof during the calcination leaves an increased amount of carbon in the alumina powders, thus lowering purity thereof.

3

Suitable methods for carrying out the calcination in the presence of a chlorine-containing substance include methods of admixing the substance with the aqueous dispersion of aluminum hydroxide prior to spray drying, admixing the substance with spray-dried powder, and introducing the substance into a calcining furnace at the time of calcination to make it contact with the aluminum hydroxide or transition alumina. These methods can also be applied in their combination.

When the aluminum hydroxide or transition alumina contains soda components, chlorine-containing substances present during the calcination have naturally the effects of eliminating the soda components from the feed powder besides the above noted effect.

However, when no chlorine-containing substance is added and another soda-eliminating agent, for example, sodium fluoride-siliceous substance mixtures, is used, the soda-eliminating effect can be achieved but it is impossible to obtain alumina particles having smaller aspect ratios.

When the soda content in the feed aluminum hydroxide is high, a siliceous substance may be added at the time of the calcination to reduce the soda content. Such siliceous substances include silica stone, quartz, silica sand, chamotte, mullite, sillimanite, magnesium silicate, aluminum silicate and the like.

The way of using such siliceous substances varies with types of calcining furnace employed. When a tunnel furnace is employed for calcining, saggers made of a siliceous substance are used in the furnace or 5 to 10 mm ∅ balls of a siliceous substance are added in the saggers.

When a rotary kiln is employed, it is best suited to add either smaller balls made of a siliceous substance or silica sand.

In these cases, the siliceous substance absorbs the soda generated during the calcination of aluminum hydroxide, thus promoting reduction of the soda content.

Amounts of siliceous substance to be added are 1% or more, preferably 5 to 10%, in terms of $SiO_2$ weight based on the alumina (dry basis).

In the process of the invention, optimum conditions for the calcination vary with types of furnace employed and hence cannot be determined unanemously. Suitable temperatures for the calcination are generally 1000°C and higher, preferably in the range of 1100 to 1500°C. Retention time at the above temperature range is from several minutes to scores of minutes in the case of a fluidized bed furnace or a flash roaster type furnace and several hours in the case of a tunnel furnace.

The retention time in relation to the calcination temperature are properly chosen according to the intended particle sizes of the product $\alpha$-alumina. It is a matter of course that particle sizes of $\alpha$-alumina increase with an increase in retention time and with an increase in calcination temperature.

There is no particular restriction on the type or structure of calcining furnace to be employed so far as the above calcining temperatures and retention times are secured. Known adaptable furnaces include rotary kilns, roller hearth kilns, tunnel furnaces, pneumatic conveying furnaces, fluidized bed furnaces, flash roaster type furnaces, and electric furnaces.

The thus calcined alumina powders are cooled and serve immediately or after sieving as a desired product of the invention, that is, alumina powders having a sharp size distribution. When the calcination is carried out in the presence of a chlorine-containing substance, the obtained alumina powders have small aspect ratios in addition to the above characteristics.

The reason why the process of the present invention provides alumina having a sharp size distribution is not clear, but may be reasoned as follows: According to the conventional process wherein aluminum hydroxide particles deposited from a solution are separated from the liquid by decantation, filtration, or some other methods and then dried, these particles agglomerate during the above steps, in which crystal surfaces of neighboring primary particles match with others this causing the growth of $\alpha$-crystals during the calcination and resulting in coase particles having broad size distribution. According to the process of the present invention, a slurry containing aluminum hydroxide is prepared, then the slurry viscosity is controlled so as to prevent the agglomeration of particles, and the slurry in this state is spray-dried instantly. In this case, primary particles agglomerate to a less extent and the growth of $\alpha$-crystals due to matching of particles during the calcination proceeds to a less extent. The thus obtained alumina has uniform shapes and a sharp size distribution. In addition, a chlorine-containing substance present during the calcination accelerates the C-axial grain growth of fed alumina, resulting in $\alpha$-alumina powders which have small aspect ratios, uniform shapes and a sharp size distribution.

As described in detail hereinbefore, the product of the present process is $\alpha$-alumina powders of low soda content which has small aspect ratios and has a sharp size distribution. These alumina particles are fitted for various ceramic applications including unprecedented ceramics for electronic purposes, abrasive applications, high-grade refractory applications, and so forth, thus being of great industrial values.

The present invention is illustrated in more detail with reference to the following examples. However, these examples are intended to show merely embodiments of the present inventive process

In the examples and comparative examples, measurements were made in terms of $Na_2O$ concentrations in alumina powders obtained, particle sizes thereof at 5%-, 50%-, and 95%-cumulative weights, and densities of sintered samples prepared by compression-molding 3g each of those alumina powders in a 20-mm Ø mold by applying hydrostatic pressure (1 ton), and sintering the pressed molding at 1600°C for 2 hours. Results of the measurements are shown in Table 1.

In addition, certain alumina powders obtained in the examples and comparative examples were ground under definite conditions and changes of BET specific surface areas of the ground powders brought about by the grinding period were measured to assess the aspect ratios of powders, since aspect ratios of fine particles having an average particle diameter of 1 µm or so can not be known quantitatively but sensually from scanning electron micrographs of the particles. This concept is based on experimental facts that flaky (large aspect ratios) α-alumina crystals are readily split on grinding and hence the BET specific surface area thereof increases quickly with an increase in grinding period while α-alumina crystals having small aspect ratios, on the contrary, are hard to split and hence the BET specific surface area thereof increase gradually with an increase in grinding period.

Particle sizes were measured with a sedigraph, and the viscosity of the slurry with β-type viscometer (Tokyo Keiki Co., Ltd.; No. 2 rotor; 30 rpm; room temperature).

Example 1

One thousand eight hundreds g of aluminum hydroxide (C-301®; Sumitomo Chemical Co., Ltd.) having 0.35 wt% of soda content (as $Na_2O$) produced by the Bayer's process were dispersed in 2450 ml of water combined with 360 ml of 10% hydrochloric acid. The above aluminum hydroxide had particle size distribution as shown in Fig. 1 and particle shapes were as shown in the scanning electron micrograph of Fig. 2. Further, 180 g of 10% aqueous solution of polyvinyl alcohol (PVA 205®; Kuraray Co., Ltd.) and 30 ml of 25% aqueous ammonia were added successively to the dispersion, thereby adjusting the slurry viscosity to 200 centipoises. (200 mPa.s)

The thus obtained slurry was flash-dried by means of a rotating disk type spray dryer (Type MM; A/S NIRO ATOMIZER, Denmark) under conditions of slurry feed rate 2 ℓ/hr, slurry concentration 677 g/ℓ, disk revolution 10,000 r.p.m and drying temperature 110°C giving powders of 30 µm in the average particle diameter.

The powders were filled in mullite saggers and calcined in a box type electric furnace at 1300°C for 2 hours, and then ball-milled for 24 hours, giving alumina powders.

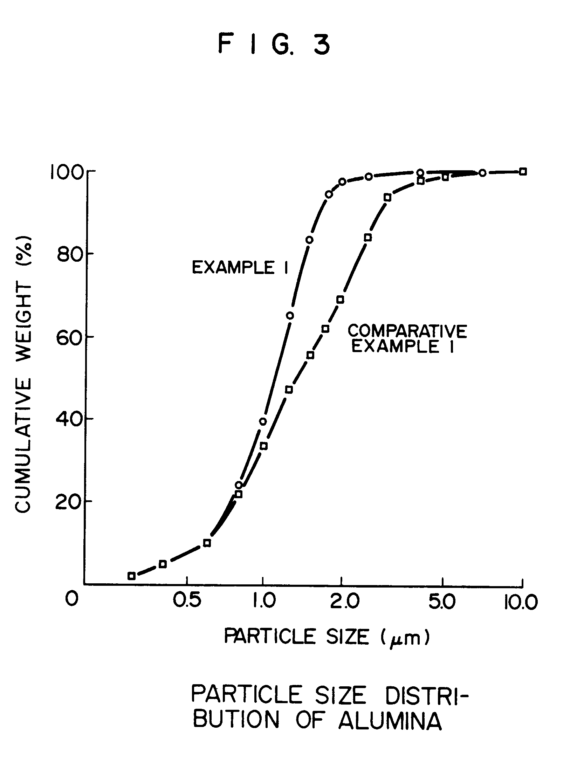

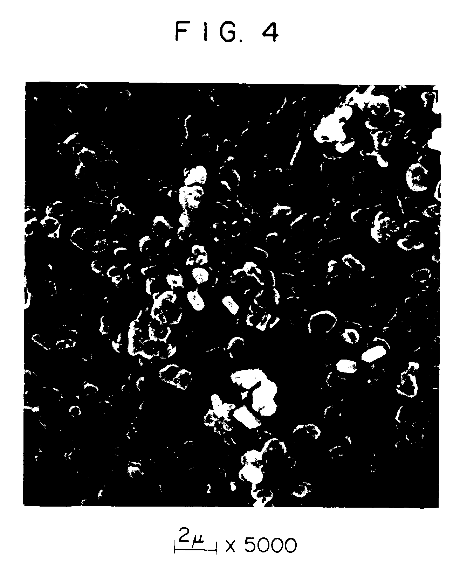

The particle size distribution of the obtained alumina powders is shown in Fig. 3 and a scanning electron micrograph of the powders is shown as Fig. 4.

Comparative Example 1

Low-soda alumina powders were prepared according to the procedure of Example 1 by calcining aluminum hydroxide prepared without being treated for the viscosity adjustment.

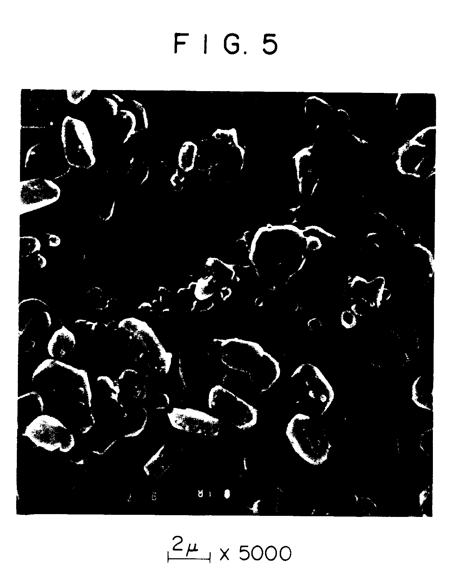

The particle size distribution of the obtained alumina powders is shown in Fig. 3 and a scanning electron micrograph of the powder is shown as Fig. 5.

Comparative Example 2

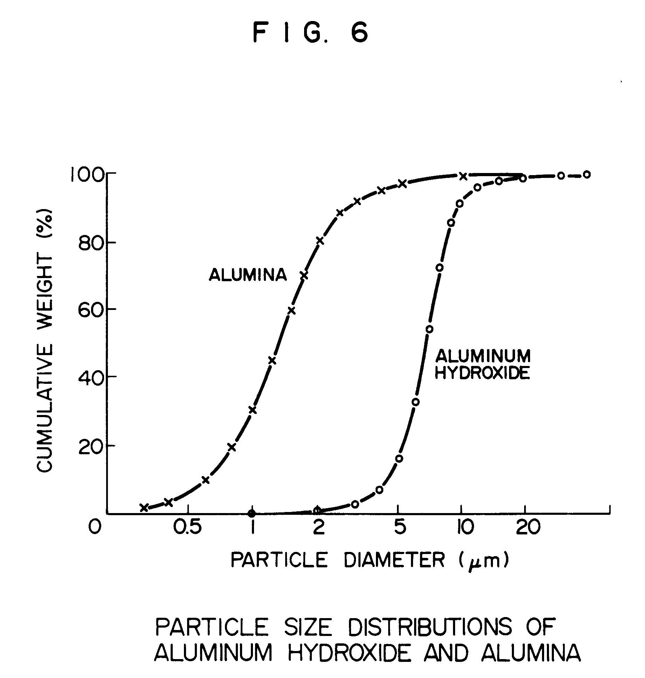

Low-soda alumina powders were prepared according to the procedure of Example 1 except that the aluminum hydroxide was replaced by one (C-308N®, Sumitomo Chemical Co., Ltd.) having particle size distribution of 7 µm for the average secondary-particle diameter as shown in Fig. 6.

The particle size distribution of the obtained alumina powders is shown also in Fig. 6.

Examples 2 and 3 and Comparative Example 3

Low-soda alumina powders were prepared according to the procedure of Example 1 except that the slurry viscosities were adjusted by adding polyvinyl alcohol and 25% aqueous ammonia in amounts shown in Table 2.

Properties of the obtained alumina powders are shown also in Table 2.

Fig. 7 shows the relationship between the BET specific surface area and the ball-mill grinding period for alumina powders obtained in Example 2.

Example 4

Alumina powders were prepared according to the procedure of Example 1 except that the hydrochloric acid was not added.

Properties of the obtained alumina powders are shown in Table 2. Fig. 8 shows the relationship between the BET specific surface area and ball-mill grinding period for the obtained alumina powders.

Comparative Example 4

Alumina powders were prepared according to the procedure of Example 1 employing direct calcination of the aluminum hydroxide filled in mullite saggers, in which the hydrochloric acid addition, viscosity adjustment and spray-drying were omitted.

Properties of the obtained alumina powders are shown in Table 2.

Example 5

Alumina powders were prepared according to the procedure of Example 1 except that the calcination conditions in the box type electric furnace were changed to $1250°C \times 2$ hours.

Properties of the obtained alumina powders are shown in Table 2. Fig. 8 shows the relationship between the BET specific surface area and ball-mill grinding period for the alumina powders.

Example 6.

The same aluminum hydroxide as used in Example 1 was calcined beforehand at $500°C$ for 4 hours, and 1500 g of the resulting alumina was dispersed in 2450 ml of water combined with 360 ml of 10% hydrochloric acid. The resulting slurry was adjusted to the viscosity of 200 centipoises (200 mPa.s) by adding 180 g of 10% aqueous solution of polyvinyl alcohol and then 45 ml of 25% aqueous ammonia. The thus obtained slurry was treated as in Example 1, giving low-soda alumina powders.

Properties of the obtained alumina powders are shown in Table 2.

Comparative Example 5

Alumina powders were prepared according to the procedure of Example 1 except that 320 ml of 1% aqueous sodium fluoride solution was used in place of 10% hydrochloric acid for addition to the slurry.

Properties of the obtained alumina powders are shown in Table 2. Fig. 7 shows the relationship between the BET specific surface area and ball-mill grounding period of the alumina powders.

Table 1

|  | $D_{50}$ | $D_5$ | $D_{95}$ | F.D | $Na_2O$ quantity |
|---|---|---|---|---|---|
| Example 1 | 1.1 | 0.4 | 1.8 | 3.80 | 0.02 |
| Comparative Example 1 | 1.4 | 0.4 | 3.0 | 3.64 | 0.02 |
| Comparative Example 2 | 1.3 | 0.4 | 3.8 | 3.66 | 0.03 |
| Note:<br>D: Particle diameter ($\mu$m)<br>F.D: Sintered density (g/cm$^3$)<br>$Na_2O$ quantity: Soda content (wt%) in alumina powders | | | | | |

6

Table 2

| | HCL (ml) | PVA (g) | $NH_3$ (ml) | Viscosity (cmp) | $D_{50}$ | $D_5$ | $D_{95}$ | F.D | $Na_2O$ quantity |
|---|---|---|---|---|---|---|---|---|---|
| | | | | | Property | | | | |
| Example 2 | 360 | 180 | 45 | 500 | 1.3 | 0.4 | 1.7 | 3.84 | 0.02 |
| Example 3 | 360 | 180 | 60 | 800 | 1.2 | 0.4 | 2.0 | 3.81 | 0.02 |
| Example 4 | 0 | 180 | 0 | 400 | 0.6 | 0.2 | 1.3 | 3.88 | 0.12 |
| Example 5 | 360 | 180 | 30 | 200 | 0.6 | 0.3 | 1.1 | 3.92 | 0.02 |
| Example 6 | 360 | 180 | 45 | 200 | 1.2 | 0.4 | 1.7 | 3.86 | 0.02 |
| Comparative Example 3 | 360 | 180 | 70 | 1200* | 1.2 | 0.4 | 2.8 | 3.68 | 0.03 |
| Comparative Example 4 | 0 | 0 | 0 | - | 0.6 | 0.2 | 2.2 | 3.80 | 0.13 |
| Comparative Example 5 | ** | 180 | 35 | 200 | 1.2 | 0.4 | 2.5 | 3.76 | 0.06 |

Note:  HCL: Hydrochloric acid
       PVA: Polyvinyl alcohol
       $NH_3$: 25% Aqueous ammonia
       D: Particle diameter (μm)
       F.D: Sintered density (g/cm$^3$)
       $Na_2O$ quantity:  $Na_2O$ content (wt%) in alumina powders

*:  The slurry adjusted to the viscosity of 1200 centipoises gave a markedly low yield of dry powders in spray-drying.

**:  320 ml of 1% aqueous NaF solution was used.

EP 0 277 730 B1

## Claims

1. A process for preparing alumina, which comprises the steps of dispersing in an aqueous solution aluminum hydroxide and/or transition alumina having average secondary-particle diameters of up to 5 $\mu$m, adjusting the resulting slurry to viscosities of 100 to 1000 centipoises, (100-1000 mPa.s) spray-drying the slurry, and calcining the resulting dry powders.

2. The process of Claim 1, wherein the viscosity adjustment is carried out by adding an aqueous ammonia and/or polyvinyl alcohol.

3. The process of Claim 1 or 2, wherein the spray-dried powders are calcined in the presence of a chlorine-containing substance.

4. The process of Claim 3, wherein the chlorine-containing substance is selected from hydrochloric acid, chlorine gas, aluminum chloride, calcium chloride and chlorine-containing macromolecular compounds.

## Revendications

1. Procédé de préparation d'alumine, qui comprend les étapes consistant à disperser dans une solution aqueuse de l'hydroxyde d'aluminium et/ou de l'alumine de transition ayant des diamètres moyens de particules secondaires allant jusqu'à 5 $\mu$m, à ajuster la suspension résultante à des viscosités de 100 à 1000 centipoises (100-1000 mPa.s), à sécher par pulvérisation la suspension et à calciner les poudres sèches résultantes.

2. Procédé selon la revendication 1, dans lequel l'ajustement de la viscosité est effectué en ajoutant de l'ammoniaque et/ou de l'alcool polyvinylique.

3. Procédé selon la revendication 1 ou 2, dans lequel les poudres séchées par pulvérisation sont calcinées en présence d'une substance contenant du chlore.

4. Procédé selon la revendication 3, dans lequel la substance contenant du chlore est choisie parmi l'acide chlorhydrique, le chlore gazeux, le chlorure d'aluminium, le chlorure de calcium et les composés macromoléculaires contenant du chlore.

## Patentansprüche

1. Verfahren zur Herstellung von Aluminiumoxid, umfassend die Schritto Dicporgieren von Aluminiumhydroxid und/oder Übergangs-Aluminiumoxid, dessen Sekundärteilchen einen durchschnittlichen Durchmesser von bis zu 5 $\mu$m aufweisen, in einer wäßrigen Lösung, Einstellen der entstandenen Aufschlämmung auf eine Viskosität von 100 bis 1000 Centipoise (100 - 1000 mPa•s), Sprühtrocknen der Aufschlämmung und Rösten der entstandenen trockenen Pulver.

2. Verfahren nach Anspruch 1, worin die Einstellung der Viskosität durch Zufügen wäßrigen Ammoniaks und/oder Polyvinylalkohols ausgeführt wird.

3. Verfahren nach Anspruch 1 oder 2, worin die sprühgetrockneten Pulver in Gegenwart einer chlorhaltigen Substanz geröstet werden.

4. Verfahren nach Anspruch 3, worin die chlorhaltige Substanz ausgewählt wird aus Chlorwasserstoff, Chlorgas, Aluminiumchlorid, Calciumchlorid und chlorhaltigen makromolekularen Verbindungen.

# F I G. I

PARTICLE SIZE DISTRIBUTION
OF ALUMINUM HYDROXIDE

# F I G. 2

$\overline{2\mu}$ x 5000

F I G. 3

PARTICLE SIZE DISTRI-
BUTION OF ALUMINA

F I G. 4

$2\mu$ x 5000

F I G. 5

$\underset{\longmapsto}{2\mu}$ x 5000

# F I G. 6

PARTICLE SIZE DISTRIBUTIONS OF
ALUMINUM HYDROXIDE AND ALUMINA

# F I G. 7

F I G. 8